# EUROPEAN PATENT APPLICATION

(11) **EP 2 487 200 A1**
(43) Date of publication of application: **15.08.2012**
(21) Application number: 10781802.3
(22) Date of filing: 07.10.2010
(51) Int. Cl.: C08K 5/54, C08K 5/00, C08K 5/057, B32B 27/32, B65D 65/40

(54) **EXTRUSION METHOD FOR PRODUCING A HYBRID POLYMER COMPOSITION, HYBRID POLYMER COMPOSITION AND ARTICLE**

(30) Priority: 07.10.2009 BR 10904397
(71) Applicant: Braskem S.A., 42810-000 Camaçari, BA (BR)
(72) Inventor: MONCADA ACEVEDO, Edwin, 95853-000 Triunfo - RS (BR)
(74) Representative: Senior, Janet
(86) International application number: PCT/BR2010/000326
(87) International publication number: WO 2011/041862

(57) **Abstract**

The present invention refers to polymer materials having hybrid characteristics, and composed of a dispersion of organometallic monomers or oligomers of Si, Ti, Zr, Hf, Ge, V or Sn, or mixture thereof, in a polymer matrix. The articles made from these polymeric materials are characterised by the migration of these compounds to the surface of the material, imparting improved surface and welding properties.

## Description

### Field of the Art

The present invention refers to polymeric materials having hybrid characteristics prepared via extrusion, which are composed by dispersion of organometallic monomers or oligomers of Si, Ti, Zr, Hf, Ge, V or Sn, in a polymeric matrix. The articles prepared with these polymeric materials are characterized by the migration of said compounds to the surface, conferring differentiated soldability and surface properties compared to those existing in the state of the art.

Among the properties that can be modified are: sealing temperature, sealing initial temperature (SIT), gas and water vapor barrier, printability, adhesion and risk resistance, besides retaining the surface polarization of parts and films for a longer time. These properties are achieved without modifying the mechanical properties of the material.

### State of the Art

Polymeric materials, such as films and parts, having improved sealing and surface properties, have been studied and obtained by different techniques described in the state of the art.

Patent application BR PI0516432-0 discloses an improved process of the already known commercial process of chemical vapor deposition (CVD) also referred to as glow discharge chemical vapor. This patent application discloses the deposition of a layer of silicon oxide, siloxane or organosilane polymerized by plasma on the surface of an organic polymer substrate by deposition with glow discharge of a gaseous mixture comprising a compound containing silicon and an oxidant. The process of deposition of the silane layer is done by mixing silane with the oxidizing gas (N₂O) in the process of chemical vapor deposition. Such application uses the generation gases of the chemical vapor deposition as carrier gas to the silane, differently to the present invention where the silane compound is added by additivation in the polymer mass and whose subsequent migration occurs by difference of polarity of the silane additive with the resin, consisting of a simplified process with fewer steps.

International publication WO 2008/080447 A1 discloses silicon or siloxane compounds grafted to the molecular chain of homopolymers or copolymers of polypropylene. In this publication, the silane compound is mixed to the polymer containing peroxides, making the silane chemically bonded to the polymeric chain.

Patent application EP 2072575 A1 describes the mixture of polypropylene with polypropylene grafted with silane groups in the molecular chain and a mineral filler, the silane being used specifically grafted on the polymer chain, acting as compatibilizing agent between the polymer and filler mineral. The clear objective of the application is to use silane as compatibilizing agent, no improvements being reported in the surface properties of the resulting compound. In the present invention, the silane is not grafted on the polymeric chain, having the possibility of mobility and/or migration to the surface of the polymeric matrix.

Patent US 5,973,070 discloses a mixture of polyolefin with improved surface hardness and risk resistance. The polyolefinic mixture consists of a polypropylene, a grafted polypropylene, a mineral and an amorphous silica gel and optionally an ethylene/propylene/polydiene terpolymer. The silane compound is in the polymer chain and is used as amorphous silica gel filler, differently to the present invention, where the silane compound is dispersed and is capable of migrating to the surface.

Pursuant to the description of the techniques cited above, the state of the art includes a mixture of organosilane compounds with polymers, using a peroxide compound to obtain a chemical bond of the organosilane in the polymeric chains. Another common procedure is the deposition of organosilanes or silicon compounds in the form of chemical or physical vapors on the surface of the films. This is to increase the gas barrier of the polymers. Both methodologies totally differ from that proposed in the present invention.

Therefore, the state of the art neither describes nor suggests that the addition of organometallic monomers or oligomers of Si, Ti, Zr, Hf, Ge, V or Sn in polymers, especially polyolefins, presents changes in the sealing characteristics and modification of the sealing window, nor surface properties.

### Summary of the Invention

The present invention refers to a process of preparing a polymeric composition that comprises the following steps:
a) Using conventional equipments for polymer additivation, mix a polymeric compound and an organometallic monomer or oligomer of Si, Ti, Zr, Hf, Ge, V or Sn or mixture thereof, such that the organometallic is dispersed in said polymeric compound without chemical bonding;
b) process the mixture obtained in (a) to obtain an article; and
c) optionally, submit the article obtained in (b) to a polarization
such that the silane compound migrates to the surface of the article.

The present invention also refers to a polymeric composition obtained by the above process, as well as an article comprising said composition.

### Brief Description of the Figures

The present invention is illustrated based on the following figures:
Figure 1: Hot-tack graph using the surfaces of the TxT film of the CP resin additivated with TEOS and HTEOS.
Figure 2: Hot-tack graph using the surfaces of the NTxNT film of the CP resin additivated with TEOS and HTEOS.
Figure 3: Ultimate graph using the surfaces of the TxT film of the CP resin additivated with TEOS and HTEOS.
Figure 4: Ultimate graph using the surfaces of the NTxNT film of the CP resin additivated with TEOS and HTEOS.
Figure 5: Ultimate graph using the surfaces of the NTxNT film of the CP resin-00 additivated with different organosilane compounds.
Figure 6: Hot-tack graph using the surfaces of the NTxNT film of the CP resin additivated with different organometallic compounds.
Figure 7: Schematic representation of the multilayered and bioriented film as well as the composition thereof.

### Detailed description of the invention

The present invention refers to polymers, especially hybrid organic-inorganic polyolefins having different properties in comparison with traditional polyolefins, such as sealing initial temperature, sealing window, sealing temperature, as well as surface properties such as gas and water vapor barrier, printability, adhesion and risk resistance.

More specifically, the polymeric compositions obtained according to the present invention have the following characteristics:
a) Increase of the sealing strength in the sealing temperature of up to 75%;
b) Decrease of the sealing initial temperature by about 15 to 25°C;
c) Decrease of the sealing temperature by about 5 to 15°C;
d) Decrease of the sealing initial temperature (SIT) by about 5 to 10°C;
e) Provides improved gas, water vapor and chemical solvent properties of the films or parts;
f) Provides improved risk resistance property in films and parts;
g) Increase the retention time of the polarizations of the surfaces not presenting decay in the first 3 months.

The hybrid material obtained according to the invention can be used in the food, pharmaceuticals, petrochemicals, automobile, household utensils, agroindustry, packaging in general, construction and aerospace industries, as well as adhesion to other materials such as metals and polar polymers, among others.

The incorporation of organometallic monomers or oligomers of Si, Ti, Zr, Hf, Ge, V or Sn, such that the organometallic is dispersed in polymer resins, is carried out by extrusion using conventional processing.

The dispersion of the monomers or oligomers of organometallic compounds of Si, Ti, Zr, Hf, Ge, V or Sn in polymers, such as polyolefins, and subsequent migration to the surface of the films or parts causes changes in the physical or chemical characteristics of the polyolefin structure, these changes mainly being noted in the surface properties, such as printability, adhesion and risk resistance of the final article. Additionally, the chemical and physical interaction of the organometallic monomers or oligomers with the resin presents changes in properties such as sealing temperature, sealing window and sealing initial temperature when films are made with the hybrid materials obtained. It is important to highlight that when the organometallic element does not migrate in the polymeric matrix, it is merely considered as a compatibilizing agent or filler, which is why it would not be commonplace to add organometallic compounds to polyolefins in order to modify the surface properties, as these compounds do not migrate to the surface because they might harmfully interact with the mechanical properties of the polymer.

The hybrid polyolefin polymer that is the object of the present invention is obtained by adding monomeric or oligomeric organometallic compounds of Si, Ti, Zr, Hf, Ge, V or Sn that have groups substituted or not by an alkylic chain of 1 to 25 carbons, or by the mixture thereof in any proportions, to a polymeric matrix by extrusion procedures.

The organometallic additive of Si, Ti, Zr, Hf, Ge, V or Sn migrates to the surface when producing films or parts with the additivated resin. This migration to the surface can be accelerated by surface treatments commonly used in the plastics transformation industry, such as corona, plasma or flame treatment. Adding the organosilane additive, for example, does not modify the properties of the hybrid polyolefin compared with the polymer. Said properties are: rheological (melt flow rate), thermal (crystallization temperature, melting temperature, crystallinity) and mechanical (yield strength, breakdown strength, elongation at break, elongation at yield). The non-modification of the properties described has the advantage of using the hybrid polymers under the same processing conditions as traditional resin and with the differentiating factor in the properties provided by the present invention.

The state of the art neither describes nor suggests the subject matter described and claimed in the present invention, since no polymeric matrix is revealed, such as a hybrid polyolefin additivated with monomeric or oligomeric organometallic compounds of Si, Ti, Zr, Hf, Ge, V or Sn for the purpose of modifying the properties, such as sealing initial temperature, sealing window, sealing temperature, surface properties such as gas and water vapor barrier, printability, adhesion and risk resistance.

The hybrid polyolefin according to the present invention particularly comprises the following components:
a) polyolefins, preferably using monomers of propylene or ethylene or copolymers of propylene or ethylene;
b) monomeric or oligomeric organometallic compounds of Si, Ti, Zr, Hf, Ge, V or Sn, which may or may not be substituted by one or more alkoxide functional groups by olefin chains of 1 to 25 carbon atoms, as well as organic functional groups having double bonds or conjugated bonds.

Therefore, the present invention refers to hybrid polyolefins where the interaction of organometals of Si, Ti, Zr, Hf, Ge, V or Sn with the polyolefin has different properties in relation to the polyolefin without adding said compounds.

Preferably, the present invention refers to a process for preparing said polymeric composition comprising the following steps:
a) feed an organometallic monomer or oligomers of Si, Ti, Zr, Hf, Ge, V or Sn into a mixture system in concentrations of 0.01% to 30%, in mass, in relation to the polymer such that said compound is dispersed in the polymer mass without chemical bonding between said compound and the polymer. The organometals used may or may not be substituted by alkyl groups. The alkyl groups are responsible for hybrid characteristics of the material obtained;
b) process the mixture obtained in (a), obtaining an article, such as a film or plastic part, more particularly, a multilayered, bioriented film, a blown film, flat-die film, calendering part, injected or rotomolded part;
c) optionally, polarize the surface of the part obtained in (b) by way of, for example, corona treatment, plasma treatment, flame treatment or chemical treatment. The objective of this step is to change (increase) the polarity of the article surface, generating a preferred migration of the organometals to the polarized surface.

The organosilanes used are preferably tetraethylorthosilicate (TEOS), ethyltrimethoxysilane, ethyltriethoxysilane, methyltriethoxysilane, phenyltriethoxysilane, n-octylethoxysilane, vinyltrimethoxysilane, n-butylethoxysilane.

The organotitanates used are preferably tetraethoxytitanium, ethyltriethoxytitanium, methyltriethoxytitanium, phenyltriethoxytitanium, n-octylethoxytitanium, n-butylethoxytitanium.

The organozirconates used are preferably tetraethylozirconate, tetrapropylzirconate, tetrabutylzirconate, n-octylzirconate.

The polymers used are preferably polyolefins of ethylene or propylene or copolymers formed by these monomers.

In the case of obtaining injected or rotomolded parts with the composition of the invention, a decrease in the injection or rotomolding cycle time is advantageously noted.

To obtain multilayered, bioriented film with the composition of the invention, a decrease in the initial solder temperature is noted, as is an increase in the surface treatment retention time (corona, flame, plasma treatment, among others).

The composition described and claimed in the present invention is used as modifier of the sealing and surface characteristics of polymers, sealing which may be preferable for a surface due to the fact that the organometal of Si, Ti, Zr, Hf, Ge, V or Sn, when dispersed in polyolefin, may migrate due to the polarity difference with the matrix.

During the course of the present description, the terms below shall mean as follows:
Hybrid: compound having organic or inorganic characteristics
   - SIT: sealing initial temperature - in the ultimate graph, it is the temperature in which the sealing strength is greater than 0.5N
   - Silane = Organosilane = Siloxane
   - Organometal = Metallic element (Si, Ti, Zr. Hf, Ge, V, Sn) chemically bonded to an alkoxide group (-OR)

The present invention is illustrated herein based on the following examples, which are described merely as an illustration and are not limiting. The invention can be carried out using other means.

### Example 1: Process of obtaining hybrid polymers with improved surface and sealing properties, using TEOS as additive

The following examples are related to the obtainment of the hybrid polymers, and the effect on the surface and sealing properties of polyolefins.

Incorporating organosilane into the polymeric matrix was performed by using standard extrusion procedures, such as temperature profile, type of screw and type of extruder normally used in additivation processes. After incorporating the organosilane in the propylene copolymer, films are made in a blown film extruder, not being limited to this kind of equipment, and the injected parts were made in an injector. The thickness of the films was from 10 to 80 µm and the injected parts were between 1 and 4 mm.

After obtaining the film, the surface was modified by corona treatment at a level of 40 dynas. The analysis of the film sealing was performed on samples obtained from the same sample, but having different characteristics, as below:
Sample NT: Sample with no surface modification
Sample T: Sample with surface modification (Corona)

In order to prove the modification of the sealing properties of the polymers, a copolymer of propylene was used, referred to in the present invention as CP.

### Sealing curve analyses

To determine the modification in the sealing properties of the hybrid polyolefins, Hot-tack (ASTM F-1921 standard), and Ultimate (ASTM F-2029 standard) tests were carried out. The results and the analyses are presented below.

Some common codings in the Hot-tack and Ultimate analyses and that are part of the present description are:
NT-NT: Sealing analysis using an untreated film surface (NT) in contact with another surface of the untreated film (NT);
T-T: Sealing analysis using a film surface treated with corona (T) in contact with another surface of the film treated with corona (T).

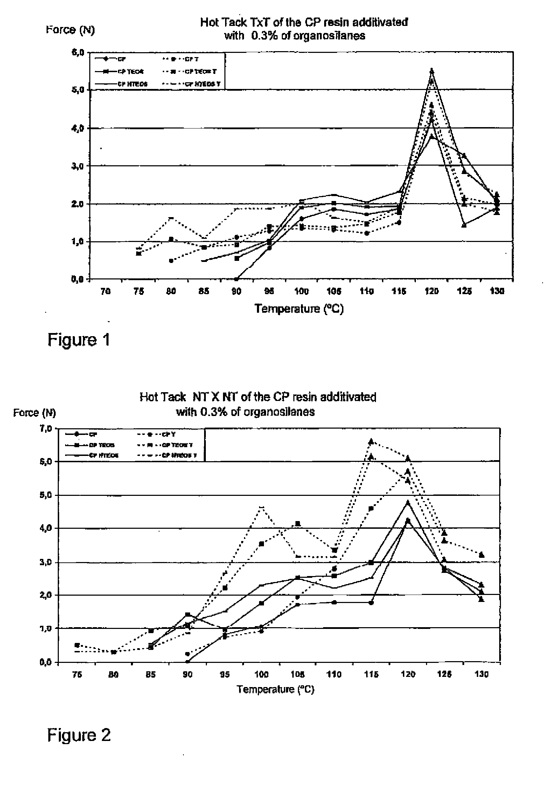

Graph 1, pursuant to Figure 1, presents the variation of the sealing window for the CP resin additivated with different organosilane compounds. The following legends and conventions are adopted in the graph:
□CP: Film made with a copolymer of propylene resin
□CP T: CP with surface modification
□CP TEOS: CP additivated with TEOS
□CP TEOS T: CP with surface modification and additivated with TEOS
□CP HTEOS: CP additivated with TEOS (modified in acid medium)
□CP HTEOS T: CP with surface modification and additivated with TEOS (modified in acid medium)
□Filled-in triangular symbol in the graph: the sealing temperature of the film is attained
□To determine the sealing initial temperature (SIT), it is necessary to note on the Ultimate graph strength of 0.5N and a temperature that corresponds to this strength will be SIT.

### Hot-Tack Methodology

The Hot-tack test consists of determining the hot sealing strength of the surfaces of the films at a specific temperature. With the data obtained in this test, the hot sealing window graph is drawn.

The data obtained from the Hot-tack analyses for the CP resin additivated with different organosilane compounds and where the TxT surfaces are in contact in the test, are presented in Figure 1. It is possible to note a major modification of the sealing window of the CP resin compared with the resins additivated with the organosilane compounds.

The greatest modification of the window was obtained for the sample CP-HTEOS-T (_____). Specifically, a major drop in the initial temperature of the sealing window was determined (considered when a strength of 0.5N is achieved) of 95°C for the sample CP (_____) up to 75°C for the sample CP-HTEOS-T (_____). Another important parameter which presented major change is the strength obtained in the sealing temperature (120°C) (identified as a (▲) in the sealing window graph) for the sample CP = 4.23N, and for the sample CP-TEOS (-■-) = 5.51N, presenting an increase of approximately 30% in the sealing strength.

Greater modifications in the sealing window were obtained when an evaluation was made of the surfaces of the NTxNT films of the CP resin additivated with different silanes, as presented in Figure 2. The greatest modification of the window was obtained for the sample CP-HTEOS-T(_____).

Specifically, a decrease was noted in the sealing temperature of 5°C as can be seen for CP-TEOS-T (--■--|) and CP-HTEOS-T (______) samples compared with the CP samples. A major decrease was also observed in the initial temperature of the sealing window (considered when a strength of 0.5N is achieved) of 95°C for the sample CP up to 75°C for the sample CP-HTEOS-T and CP-TEOS-T. Another important parameter which presented a major modification was the strength obtained in the sealing temperature (120°C) (identified by a (▲) in the sealing window graph) for the sample CP = 4.21 N, and for the sample CP-TEOS (-■-)= 6.10N, presenting an increase of approximately 45% in the sealing strength.

### Ultimate methodology

The Ultimate test consists of determining the sealing strength after cooling of the film surfaces at a specific sealing temperature. With the data obtained in this test, the sealing window graph after cooling is drawn.

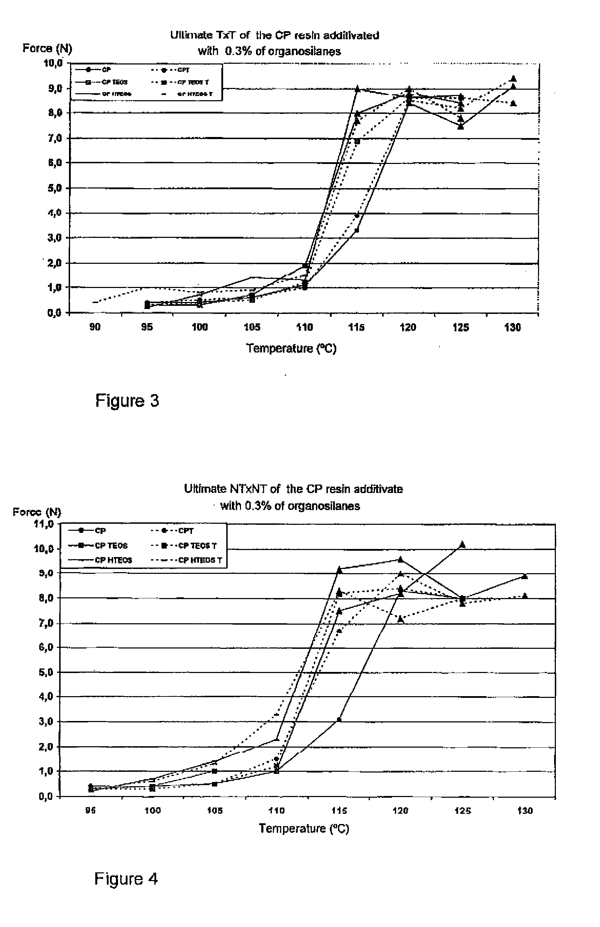

The data obtained from the ultimate analyses for the CP resin additivated with different organosilane compounds and where there TxT surfaces are in contact in the test, is shown in Figure 3. Again it is possible to observe major changes in the sealing window of the CP resin compared with the resins additivated with the organosilane compounds.

A decrease was obtained in the sealing temperature (120°C) (identified by a (A) in the sealing window graph) to 115°C with the CP-TEOS (-■-), CP-HTEOS (_____), CP-HTEOS-T (______) samples. One of the most important determinations is the sealing initial temperature (SIT) and, as stated previously, the Ultimate graph shows a strength of 0.5N. In figure 3, it is possible to note a -reduction from 95°C to 90°C corresponding to the CP and CP-HTEOS-T samples.

Figure 4 shows the sealing window graph after cooling for the CP resin additivated with different organosilane compounds and where the NTxNT surfaces are in contact in the test. In general, a behavior similar to that in figure 3 is noted, demonstrating that the two sides of the film made with the CP resin additivated with different organosilanes present significant change and provides evidence of non-modification of the rheological, thermal and mechanical properties of the hybrid polymers compared to the non-hybrid polymers.

### Rheological property - determined by the melt flow rate

Table 1 presents the melt flow rate (IF) values for the different materials obtained. It can be seen that the melt flow rate does not present a significant variation indicating that the CP resin did not sustain degradation processes of the molecular chain.

**Table 1. Melt flow rate (FR) values of CP resin additivated with 0.3% of different organosilanes**

| **Sample** | **FR(190°C/2.16 Kg)** |
|---|---|
| CP | 6.43 |
| CPT | 6.30 |
| CP-TEOS | 6.38 |
| CP-TEOS-T | 6.90 |
| CP-HTEOS | 7.05 |
| CP-HTEOS-T | 7.00 |

### Physical and mechanical properties by differential scanning calorimetry and ultimate tensile strength analyses

The values of the data obtained by thermal analyses using the differential scanning calorimetry technique (DSC) are listed in table 2. In the present invention they are to be interpreted as follows:
Tc: Crystallization temperature
Tm2: Melting temperature of the second heat
Xc: Crystallinity percentage of the material

**Table 2. Values of the parameters obtained in the DSC graph in the CP resin additivated with 0.3% of different organosilanes**

| **Sample** | **Tc (°C)** | **Tm2 (°C)** | **Xc (%)** |
|---|---|---|---|
| CP | 103 | 137 | 40 |
| CPT | 100 | 136 | 39 |
| CP-TEOS | 101 | 136 | 40 |
| CP-TEOS-T | 100 | 136 | 39 |
| CP-HTEOS | 101 | 136 | 39 |
| CP-HTEOS-T | 101 | 136 | 41 |

It can be noted in this table that the Tc, Tm2 and Xc values do not present significant variations in any of the materials tested. Accordingly, it can be said that the presence of the different organosilane additives in the CP resin did not change the thermal properties of the CP resin. As stated previously, the hybrid polymer may be processed in the same conditions as the non-hybrid polymer.

Table 3 shows the values of yield strength, breakdown strength, elongation at break, elongation at yield of the mechanical parameters obtained from the ultimate tensile strength analysis for the materials generated by additivation of different organosilanes in the CP resin.

**Table 3. Values of the parameters obtained in the DSC graph in the CP resin additivated with 0.3% of different organosilanes**

| Sample | Yield strength (MPa) | | Breakdown Strength (MPa) | | Elongation at break (MPa) | | Elongation at yield (MPa) | |
|---|---|---|---|---|---|---|---|---|
| | **DM** | **DT** | **DM** | **DT** | D**M** | **DT** | **DM** | **DT** |
| CP | 17.4 | 14.2 | 31.7 | 22.1 | 740 | 616 | 14.3 | 11.4 |
| CPT | 14.3 | 13.5 | 44.7 | 33.1 | 999 | 805 | 14.0 | 13.3 |
| CP-TEOS | 15.2 | 14.1 | 37.5 | 37.2 | 1001 | 790 | 13.8 | 12.1 |
| CP-TEOS-T | 14.7 | 13.7 | 33.2 | 28.6 | 789 | 850 | 14.0 | 13.0 |
| CP-HTEOS | 14.2 | 14.4 | 27.7 | 40.0 | 633 | 962 | 14.3 | 12.0 |
| CP-HTEOS-T | 15.1 | 15.6 | 37.4 | 21.4 | 859 | 610 | 13.0 | 11.3 |

It is noted that the parts additivated with different organosilanes do not show significant changes in the values in relation to the parts without additivation, showing that adding the organosilane to the CP resin does not modify the mass properties of the polymer.

### Example 2: Process of obtaining hybrid polymers with improved surface and sealing properties, using different silages as additives

Merely to demonstrate that other organosilane compounds can have similar effects to those already presented, other Hot-tack analyses for the NTxNT film surfaces were performed. The samples generated in this test were:
□CP: Film made with a copolymer of propylene resin
□CP OT: CP with surface modification, and additivated with octyltrimethoxysilane
□CP RT: CP with surface modification, and additivated with octyltrimethoxysilane homopolymerized in acid medium.
□CP MT: CP with surface modification, and additivated with methyltrimethoxysilane

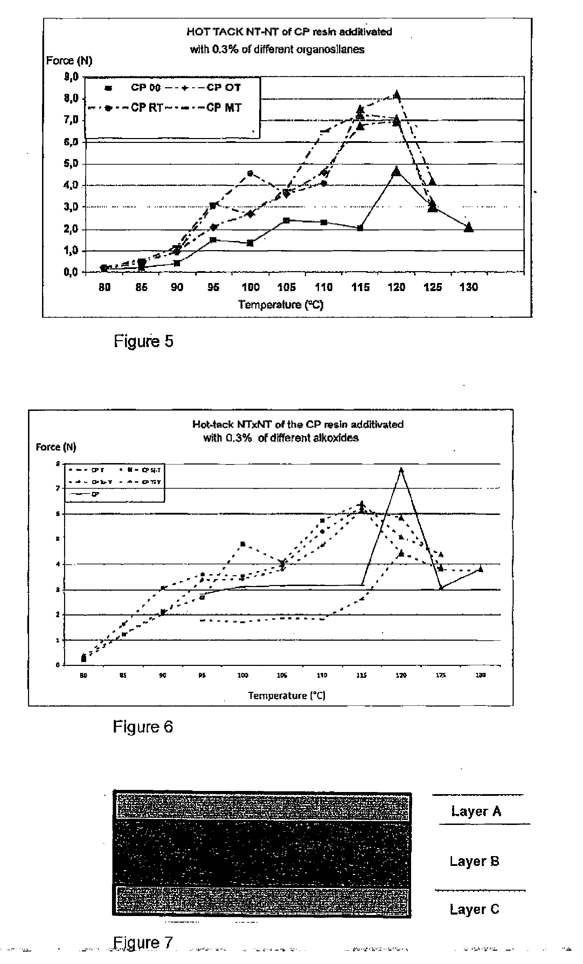

The test graph is shown in figure 5, and it is possible to see the changes in the sealing window for the other organosilane compounds used.

This change in the sealing window makes it possible to identify increases from 4.7 N, for the sample CP 00, up to 8.2 N for the sealing temperature of 120°C, normal sealing temperature for the CP resin 00, presenting an increase in the sealing strength of 75%.

It is also possible to observe the decrease in the sealing temperature of 120°C of CP 00 up to 115°C for the samples additivated with organosilanes, presenting a decrease in the sealing temperature of 5°C.

### Example 3: Process of obtaining hybrid polymers with improved surface and seating properties, using different alkoxides as additives, such as zirconates and titanates

In order to demonstrate that other organometallic compounds can have similar effects to those already presented using silicon alkoxide, other Hot-tack analyses were performed for the surfaces of the NTxNT film. The samples generated in this test were:
□CP: Film made with a copolymer of propylene resin
□CP T: CP with surface modification
□CP Si-T: CP with surface modification, and additivated with silicon alkoxide (methyltrimethoxysilane)
□CP Zr-T: CP with surface modification, and additivated with zirconium alkoxide (n-butylzirconate)
□CP Ti-T: CP with surface modification, and additivated with titanium alkoxide (n-propyltitanate)

The test graph presented in figure 6 shows changes in the sealing window when using alkoxide compounds of titanium and zirconium, in addition to silicon alkoxide as already mentioned.

This change in the sealing window makes it possible to identify the decrease of the sealing temperature of 120°C of the CP sample up to 115°C for the samples additivated with different alkoxide of silicon, titanium and zirconium, presenting a decrease in the sealing temperature of 5°C.

It is demonstrated that the modifications resulting from the use of silicon alkoxides can be achieved by the use of different organometallic compounds, specifically titanium alkoxides and zirconium alkoxides.

### Example 4: Process of obtaining multilayered and bioriented film with improved surface and sealing properties, using hybrid polyolefins.

For proof and illustration purposes, different samples of multilayered (three layers) and bioriented films (see figure 7) were taken. The type of polymer used in each layer may change depending on the needs and applications of the film. For the present patent application, the layers will be identified as follows: layer A, layer B and layer C. Layer A is defined as a layer that will have surface modification to improve the characteristics of printability, layer B is the mechanical structuring layer of the film, and layer C is in charge of film sealing ability when it is necessary to make bags or closed packaging.

Each of the layers can be made with each of the different polymers used in the present patent application. The polymers used were:
Polymer A: Polyolefin used to provide the film surface treatment retention properties
Polymer B: Polymer used to give structure and mechanical properties to the film.
Polymer C: Polyolefin with the addition of 0.3% of the tetraethoxysilane (Hybrid polyolefin) additive
Polymer D: Polyolefin with the addition of 0.3% of the vinyltrimethoxysilane (hybrid polyolefin) additive

The samples that were generated pursuant to figure 7 are listed in table 4.

**Table 4. Multilayered and bioriented samples generated.**

| **Sample** | **Layer A** | **Layer B** | **Layer C** |
|---|---|---|---|
| **Sample** 1 | **Polymer A** | **Polymer B** | **Polymer A** |
| **Sample 2** | **Polymer A** | **Polymer B** | **Polymer C** |
| **Sample 3** | **Polymer C** | **Polymer B** | **Polymer C** |
| **Sample 4** | **Polymer A** | **Polymer B** | **Polymer D** |
| **Sample 5** | **Polymer D** | **Polymer B** | **Polymer D** |

The main properties that the hybrid polyolefin confer to the multilayered and bioriented film are: the decrease in the initial soldering temperature, the increase in surface treatment retention time (corona, flame, plasma treatment, among others), increased gas barrier and increased risk resistance.

Sealing initial temperature: It is defined as the temperature wherein the sealing strength is greater than 2 Newton (N). For the purposes of the present patent application, analyses were performed while keeping the sealing temperature at 110°C and verifying whether the strength is higher than 2.0 N. If the sample shows strength greater than 2.0N, it will be considered to be an improvement in the sealing initial temperature. This is because in industrial applications of the multilayered and bioriented films, the definition of the technical parameter for the sealing initial temperature is made in a fixed temperature condition of 110°C and evaluation of the strength as mentioned previously.

Surface treatment retention: is defined as a surface treatment retention time greater than two months in which the film exposed to surface treatment (corona, flame, plasma, among others) does not present decay of at least 20% in the surface treatment.

Table 5 shows the comparative properties of the initial sealing strength and the corona treatment.

It is possible to note that when the hybrid polyolefin (polymer C and/or polymer D) is in the structure of the multilayered and bioriented film (samples 2, 3, 4 and 5), the sealing strength property at a temperature of 110°C is greater than 2.0 N. This demonstrates better performance of this property when compared to the hybrid polyolefin (polymer C and polymer D) with the polyolefin (polymer A in the structure of sample 1- sealinging layer).

**Table 5. Sealing and surface treatment retention properties in multilayered and bioriented films.**

| Sample | Sealing strength at a temperature of 110 °C (N) | Corona treatment (dynas/cm2) | | |
|---|---|---|---|---|
| | | 0 months | 1 month | 3 months |
| Sample 1 | **0.8** | > 46 | 46 | < 34 |
| Sample 2 | **2.4** | 46 | 46 | < 34 |
| Sample 3 | **3.0** | 46 | 46 | 46 |
| Sample 4 | **2.2** | 46 | 46 | 46 |
| Sample 5 | **2.7** | 46 | 46 | 46 |

For the surface treatment retention property, it is possible to note in table 5 the changes of the surface treatment with the time for the different samples prepared.

The analyses show that when the hybrid polyolefin is used (in layer A- layer of surface treatment retention) in the structure of the multilayered and bioriented film (samples 3, 4, and 5), a retention of the level of surface treatment in the first three months was found. Contrarily, when analyzing the data from the samples where the hybrid polyolefin in layer A was not used, a reduction of the level of surface treatment is noted. It is therefore demonstrated that the hybrid polyolefin the level of surface treatment retention is maintained for a longer time.

Having described examples of preferred embodiments, it must be understood that the scope of the present invention encompasses other possible variations, and is only limited by the content of the accompanying claims, potential equivalents being included therein.

## Claims

1. Process via extrusion for preparing a hybrid polymer composition **characterized by** comprising the following steps:
a) mix a polymeric compound and an organometallic monomer or oligomer of Si, Ti, Zr, Hf, Ge, V or Sn or mixture thereof, such that the organometallic is dispersed in said polymeric compound without chemical bonding;
b) process the mixture obtained in (a) to obtain an article; and
c) optionally, submit the article obtained in (b) to a polarization such that the silane compound migrates to the surface of the article.

2. Process via extrusion, according to claim 1, characterized wherein the polymeric compound is a polyolefin of ethylene of propylene or copolymer of ethylene and propylene.

3. Process via extrusion, according to claim 1, characterized wherein the organometallic monomer or oligomer of Si, Ti, Zr, Hf, Ge, V or Sn comprises: tetraethylorthosilicate (TEOS), ethyltrimethoxysilane, ethyltriethoxysilane, methyltriethoxysilane, phenyltriethoxysilane, n-octylethoxysilane, vinyltrimethoxysilane, n-butylethoxysilane, tetraethoxytitanium, ethyltriethoxytitanium, methyltriethoxytitanium, phenyltriethoxytitanium, n-actylethoxytitanlum, n-butylethoxytitanium, tetraethylozirconate, tetrapropylzirconate, tetrabutylzirconate, n-octylzirconate of mixtures thereof.

4. Process via extrusion, according to claim 3, characterized wherein the organometallic monomer or oligomer is organosiloxane.

5. Process via extrusion, according to claim 4, characterized wherein the organosiloxane is tetraethylorthosilicate (TEOS).

6. Process via extrusion, according to claim 1, characterized wherein the organometallic compounds of step (a) are in the proportion of 0.01 to 10%, in mass, of organometallic compound in relation to the polymer.

7. Process via extrusion, according to claim 6, characterized wherein the percentage of organometallic compound is preferably 0.3%, in mass, of organometallic compound in relation to the polymer.

8. Process via extrusion, according to claim 1, characterized wherein the article obtained in step (b) is a multilayered, bioriented film, blown film, flat-die film, calendering part, injected or rotamolded part.

9. Process via extrusion, according to claim 1, characterized wherein the polarization of step (c) may be corona, plasma, flame or chemical treatment.

10. Hybrid polymer composition **characterized by** being obtained according to the process defined in any of claims 1 to 9 and comprising:
a) a polymeric compound; and
b) an organometallic monomer or oligomer of Si, Ti, Zr, Hf, Ge, V or Sn or mixture thereof.

11. Hybrid polymeric composition according to claim 10, **characterized by** presenting:
a) Increase of the sealing strength in the sealing temperature of up to 75%;
b) Decrease of the sealing initial temperature between 15 and 25°C;
c) Decrease of the sealing temperature between 5 to 15°C;
d) Decrease of the sealing initial temperature (SIT) between 5 and 10°C;
e) Decrease of the sealing temperature between 5 and 10°C;

12. Article, **characterized by** comprising a hybrid polymer composition as defined in any of claims 10 and 11.

13. Article, **characterized by** being obtained by the process as defined in any of claims 1 to 9.

14. Article, **characterized by** being a hybrid multilayered, bioriented film that comprises a hybrid polymer composition as defined in any of claims 10 to 12.
